# EUROPEAN PATENT APPLICATION

(11) **EP 2 752 799 A1**
(43) Date of publication of application: **09.07.2014**
(21) Application number: 13005642.7
(22) Date of filing: 04.12.2013
(51) Int. Cl.: G06Q 30/00

(54) **Methods and systems to reach target customers at the right time via personal and professional mood analysis**

(30) Priority: 02.01.2013 US 201313732790
(71) Applicant: SAP AG, 69190 Walldorf (DE)
(72) Inventor: Chan, Lap, 69190 Walldorf (DE); Duan, Bin, 69190 Walldorf (DE)
(74) Representative: Müller-Boré & Partner Patentanwälte PartG mbB

(57) **Abstract**

The disclosure generally describes computer-implemented methods, software, and systems for assessing a customer's mood by analyzing social network data. One computer-implemented method includes identifying a customer to monitor for mood, identifying at least one set of social network account information for the identified customer, accessing content items from at least one social network associated with the at least one set of social networking account information for the customer, determining a mood score for the identified customer based on the content items, and recording the determined mood score in a database.

## Description

### BACKGROUND

Sales and marketing organizations use customer relationship management (CRM) solutions to track information relating to current and potential customers. The information may include contact information, billing information, and other relevant data useful in maintaining the relationship. A CRM solution may also include tools to help target selling and cross-selling efforts. One aspect of these efforts is presenting a sales pitch to the right person at a current or potential customer. In both business-to-consumer (B2C) and business-to-business (B2B) contexts, sales and marketing professionals may contact the right person with a sales pitch, but then determine, during the contact, that they have reached that person at the wrong time. The person may be engaged in another activity, may have a poor personal or professional mood at that time, or may be otherwise unreceptive to the sales pitch due to the pitch being presented at an inopportune time.

### SUMMARY

The present disclosure generally describes computer-implemented methods, software, and systems for assessing a customer's mood by analyzing social network data. One example computer-implemented method includes identifying a customer to monitor for mood, identifying at least one set of social network account information for the identified customer, accessing content items from at least one social network associated with the at least one set of social networking account information for the customer, determining a mood score for the identified customer based on the content items, and recording the determined mood score in a database.

While generally described as computer implemented software embodied on tangible media that processes and transforms the respective data, some or all of the aspects may be computer implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### DESCRIPTION OF DRAWINGS

FIGURE 1 illustrates an example environment for implementing various features of a system capable of gathering social network data for a customer, analyzing that data to produce mood data, and determining a current mood for the customer.
FIGURE 2 is a flowchart of an example method for gathering and analyzing social network data to evaluate a customer's mood.
FIGURE 3 is a flowchart of an example method for analyzing a customer's social network data to produce a mood score.
FIGURE 4 is a flowchart of an example method for assessing a customer's current mood based on stored historical mood data.
FIGURE 5 is a flowchart of an example method for prioritizing contact with multiple customers based on their predicted current mood.
FIGURE 6 is a flowchart of an example method for providing feedback to the system representing a customer's actual current mood to improve the accuracy of the mood evaluation method.

### DETAILED DESCRIPTION

This disclosure generally relates to software, computer systems, and computer-implemented methods for retrieving social network data for a current or potential customer, analyzing that social network data to determine various components of the customer's mood, storing that analysis in a historical database, and determining the user's current or future mood based on the analysis. Further, the described solution may advise a member of a marketing, sales or other organization of a desirable time to contact the customer regarding a sales presentation, and may create a prioritized list of customers to call ordered based on the customer's predicted mood.

In one instance, the described solution can identify social network data associated with the potential customer in order to evaluate the potential customer's current mood. Social network data indicative of a potential customer's mood may include status updates, posts to other users, location-based check-ins, public calendar updates, public journal entries, product review, or any other suitable social network data. The system can then identify words and phrases associated with the customer's mood in the social network data. From that data, the systems and methods generate individual scores for different aspects of the customer's mood (e.g. professional mood, personal mood, activity relevance). These individual scores are then combined into a component score. The scores may be weighted in this combination according to a customer type, such as business-to-business (B2B) or business-to-consumer (B2C). A historical record of the potential customer's mood scores may also be stored.

By analyzing this historical record, the described solution may analyze the potential customer's mood and may provide a marketing or sales professional with an assessment of the potential customer's predicted mood before the professional calls the potential customer. If the solution shows the mood score for the potential customer indicates he or she is in a "significantly good" or "good" mood, the professional might choose to call the potential customer right away. On the other hand, if the score is "significantly bad" or "bad," the professional might choose to schedule a call with the potential customer at a later time. The described solution may also include a machine learning component, allowing it to present the professional with a report or chart that illustrates how the customer's mode changes through different time of the day (for example: a "bad" mood on a weekday night, but a "significantly good" mood on a weekend morning). Armed with this information, the professional can schedule a later follow up call when the potential customer is likely to be in a good mood, and thus receptive to the sales pitch.

By tracking a customer's mood data according to the techniques described herein, a sales, marketing, or other organization may more effectively target potential customers by delivering sales presentations to them at a time when they are likely to be receptive to the information. By delivering the sales or marketing presentations to the right customer at the right time, the chance of gaining the customer's business is increased and the possibility of annoying a potential customer is decreased, leading to not only increased sales and increased revenue for the organization, but also a better corporate image.

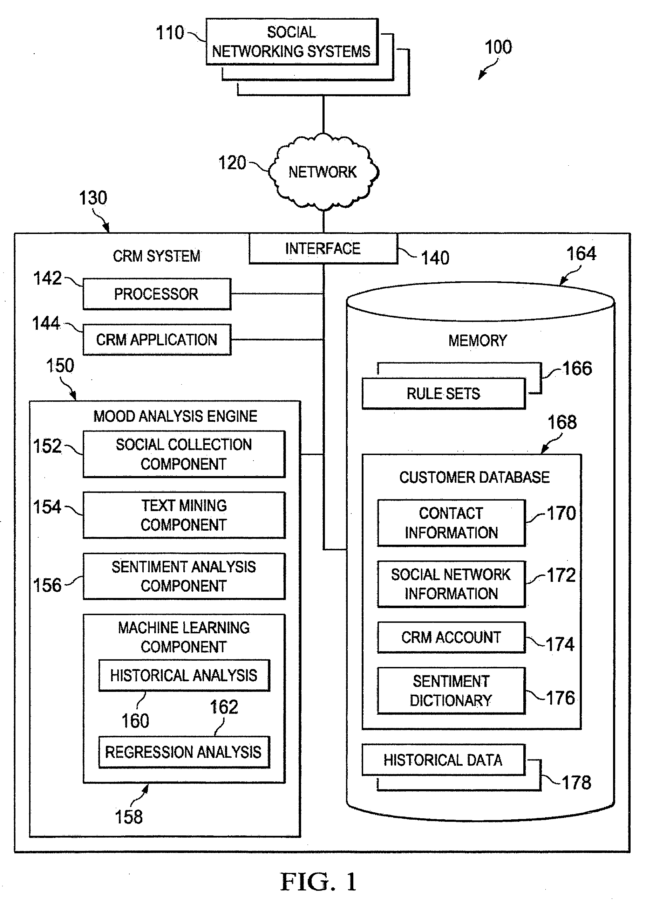

FIGURE 1 illustrates an example environment 100 for implementing various features of a system capable of operations including gathering social network data for a customer, analyzing that data to produce mood data, and determining a current mood for the customer. The illustrated environment 100 includes, or is communicably coupled with, a CRM system 130, and a plurality of example social networking systems 110. At least some of the communication between the illustrated systems, including between the CRM system 130, and one or more social networking systems 110 may be performed across or via network 120. In general, environment 100 depicts an example configuration of a system for evaluating a customer's mood by analyzing the customer's contemporaneous and historical social network data in order to assist in determining that the customer will be receptive to sales presentation at a certain time.

At a high level, the CRM system 130 is a data processing apparatus operable to track, maintain, and manage various aspects of a relationship between an organization and its current and potential customers. In the illustrated implementation the CRM system 130 includes an interface 140, a processor 142, a CRM application 144, a mood analysis engine 150, and a memory 164. In some instances, the CRM system 130 and its illustrated components may be separated into multiple components executing at different servers and/or systems. Thus, while illustrated as a single component in the example environment 100 of FIGURE 1, alternative implementations may illustrate the CRM system 130 as comprising multiple parts or portions accordingly.

The interface 140 is used by the CRM system 130 to communicate with the network 120. The interface 140 generally comprises logic encoded in software and/or hardware in a suitable combination and operable to communicate with the network 120. More specifically, the interface 140 may comprise software supporting one or more communication protocols associated with communications such that the network 120 or the interface's hardware is operable to communicate physical signals within and outside of the illustrated environment 100.

The CRM system 130 may be communicably coupled with a network 120 that facilitates wireless or wireline communications between the CRM system 130 and the social networking systems 110 as well as with any other local or remote computer, such as additional clients, servers, or other devices communicably coupled to network 120, including those not illustrated in FIGURE 1. In the illustrated environment, the network 120 is depicted as a single network, but may be comprised of more than one network without departing from the scope of this disclosure, so long as at least a portion of the network 120 may facilitate communications between senders and recipients. In some instances, one or more of the components associated with the system may be included within the network 120 as one or more cloud-based services or operations.

The network 120 may be all or a portion of an enterprise or secured network, while in another instance, at least a portion of the network 120 may represent a connection to the Internet. In some instances, a portion of the network 120 may include a portion of a cellular or mobile data network or other network capable of relaying short message service (SMS) or multimedia messaging service (MMS) messages, as well as other suitable mobile data messaging. In some instances, a portion of the network 120 may be a virtual private network (VPN). Further, all or a portion of the network 120 can comprise either a wireline or wireless link. Example wireless links may include 802.11a/b/g/n, 802.20, WiMax, 3G, 4G (i.e., LTE), and/or any other appropriate wireless link. In other words, the network 120 encompasses any internal or external network, networks, sub-network, or combination thereof operable to facilitate communications between various computing components inside and outside the illustrated environment 100. The network 120 may communicate, for example, Internet Protocol (IP) packets, Frame Relay frames, Asynchronous Transfer Mode (ATM) cells, voice, video, data, and other suitable information between network addresses. The network 120 may also include one or more local area networks (LANs), radio access networks (RANs), metropolitan area networks (MANs), wide area networks (WANs), all or a portion of the Internet, and/or any other communication system or systems at one or more locations.

In the depicted implementation, the identification of the social network data occurs over the network 120, however other means of identification are contemplated by the current disclosure, including, but not limited to, manual entry of the social network data and identification on a local, non-network based data source such as a disk. In another example, the interface 140 is a software component operable to retrieve social network data from the one or more social networking systems 110. The interface 140 may also be a hardware component specialized for the retrieval of social network data, such as a network appliance or router. The depicted interface 140 is communicatively coupled to the one or more social networking systems 110. In some cases, the social networking systems 110 are applications that allow users to seek out other users and form relationships with them (e.g., to "friend" or "follow" another user). The social networking systems 110 may keep track of these relationships between the users and present the users with information about the other users with which they have a relationship. This information may include, but is not limited to, status updates, check-ins, links, posts, and any other data that the social network systems 110 allow a user to enter. In some instances, the social networking systems 110 may include, but not limited to, Facebook, Twitter, Foursquare, MySpace, Yelp, Tumblr, LinkedIn, Google+, Orkut, Reddit, and Blogspot, as well as other suitable data sources.

The interface 140 is also used by the CRM system 130 to communicate with other systems in a client-server, cloud computer, or other distributed environment (including within environment 100) connected to the network 120.

As illustrated in FIGURE 1, the CRM system 130 includes a processor 142. Although illustrated as a single processor 142 in the CRM system 130, two or more processors may be used in the CRM system 130 according to particular needs, desires, or particular implementations of environment 100, for instance, when the CRM system 130 includes a plurality of servers or other computers. The processor 142 may be a central processing unit (CPU), a blade, an application specific integrated circuit (ASIC), a field-programmable gate array (FPGA), or another suitable component. Generally, the processor 142 executes instructions and manipulates data to perform the operations of the CRM system 130 and, specifically, the functionality associated with the identification and analysis of social network data in order to produce and store customer mood data.

The CRM system 130 also includes a CRM application 144. The CRM application 144 may be or may include any suitable application(s), program(s), module(s), process(es), or other software that may execute, change, delete, generate, or otherwise manage information associated with current or potential customers of the organization operating the CRM system 130. Specifically, the CRM application 144 may be used to handle collected opportunity information associated with one or more prospective or current customers of the organization. In some instances, the CRM application 144 may be used by sales representatives employed directly by the organization. The CRM application 144 may be used to access information associated with one or more preferences, configuration information, and master data associated with different customers. In some instances, the CRM application 144 may be used to initiate and finalize sales of the organization's products or services based on configuration information provided by the prospective customer.

The CRM system 130 also includes a mood analysis engine 150. The mood analysis engine 150 may be or may include any suitable application(s), program(s), module(s), process(es), or other software that may analyze social network data to assist in a determination of a potential set of customer's current and historical mood. In some instances, the mood analysis engine 150 may be included in or a part of the CRM application 144. In the depicted implementation, the mood analysis engine 150 includes a social collection component 152, a text mining component 154, a sentiment analysis component 156, and a machine learning component 158.

The social collection component 152 communicates via the network 120 to acquire or collect social network data from the one or more social networking systems 110. The social networking data may include one or more content items from the one or more social networking systems. The social collection component 152 may collect information for a single customer managed by the CRM system 130. In such cases, a plurality of social collection components could execute in parallel and collect social data for each customer configured to be monitored by the mood analysis engine 150. In other implementations, the number of customers for which the social collection component 152 collects social network data is determined by the organization, the current operations of the CRM system 130, or other parameters dynamically or statically defined within the system. The social collection component 152 may retrieve social network data by using functions from application programming interfaces provided by the social network data sources. The social collection component 152 may also retrieve content items from a user's public feed.

In some situations, a single social collection component 152 collects social network data for all customers monitored by the mood analysis engine 150. Alternatively, multiple social collection components may cooperate to collect social network data for the customers monitored by the mood analysis engine 150. The multiple social collection components may each collect social network data for a single customer or for multiple customers.

The text mining component 154 analyzes social network data collected by the social collection component, and can then process at least a portion of the collected social network data to prepare it for sentiment analysis. In one example, this processing includes tokenizing the social network data into individual words that can be analyzed by the remainder of the system. The processing may also include tokenizing the social network data into words and phrases that can be analyzed by the remainder of the system. The processing may further include translating the social network data into a language that can be analyzed by the remainder of the system. In other situations, the processing includes altering the format of the social network data to a format that can be analyzed by the remainder of the system. For example, the text mining component 154 may reformat a markup language such as HTML or XML into a clear text representation of the social network data. In another example, the text mining component 154 may strip new lines and other formatting characters from the social network data. In another example, the text mining component 154 may convert the social network data from one character set to another, such as from ASCII to UNICODE or vice versa.

The sentiment analysis component 156 analyzes the social network data processed by the text mining component 154 to deduce information about the customer's current mood. The sentiment analysis component 156 takes into account multiple factors in deducing the customer's current mood, including, but not limited to, the content of the social network data, the type of social networking data, and the context in which the social networking data is posted, the time of day when the social network data was produced, the tone or inflection of the social network data, the recipient of the social network data in directed social mediums (e.g., Facebook wall posts), and the social network data's relationship to previously analyzed social network data for the customer or other customers. Further, the sentiment analysis component may utilize a sentiment dictionary, such as sentiment dictionary 176 (discussed below), to identify words and phrases indicating the customer's mood and indicate how those words and phrases affect the customer's current mood. In addition, the sentiment analysis component 176 may combine or relate words or phrases during its analysis based on the context of the message, the usage of the words or phrases within the message, or on any suitable other factor or factors. For example, the phrase "I am in a bad mood" by itself would not be analyzed in the same manner as the phrase "Jill said: 'I am in a bad mood."' The sentiment analysis components might recognize that "Jill said" should be grouped with the rest of the phrase in order to deduce the proper meaning. In some situations, the sentiment analysis component 156 may store the results of its analysis in a database for future processing and analysis, such as by the machine learning component 158.

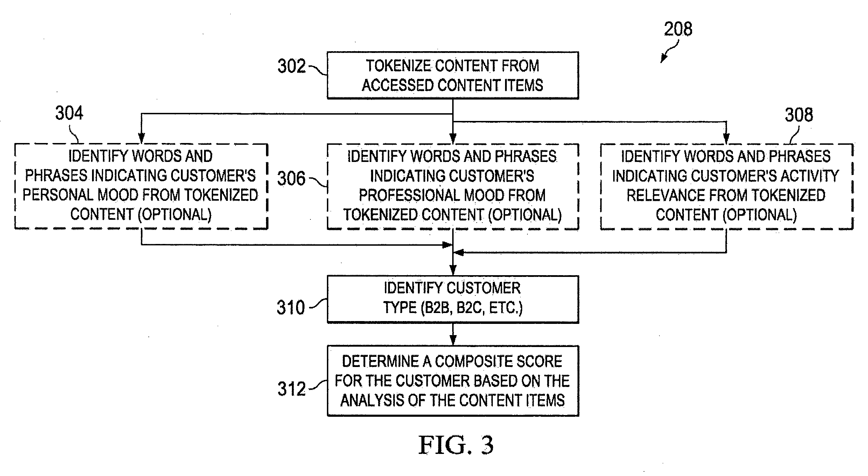

The sentiment analysis component 156 can produce a mood score indicative of the customer's current mood based on the social network data. Additionally, information collected from a plurality of historical sentiment analyses can be combined with a current sentiment analysis to provide additional weight and consideration to the current analysis. FIGURE 3 and its associated discussion below provide a description of example methods that may be used to produce the mood score.

The machine learning component 158 analyzes current and historical mood data to predict a customer's future mood. This prediction can be used to alert a representative when a customer is likely to be responsive to a sales presentation based on their predicted mood. In the depicted example, the machine learning component 158 includes a historical analysis component 160 and a regression analysis component 162. The historical analysis component 160 may analyze the historical data using known statistical techniques to determine whether cyclic trends or tendencies in the customer's mood are apparent from the historical social network data. These statistical techniques may include linear regression, exponential smoothing, or any other suitable technique or combination of techniques. The regression analysis component 162 can perform a regression analysis on the historical social network data to forecast or predict the customer's mood based on identified variables in the historical social network data. Additional analyses may be used, as appropriate, in association with the machine learning component 158.

In some implementations, the machine learning component 158 may include a feedback mechanism that allows it to receive an indication of the customer's actual mood after providing a predicted mood. The customer's actual mood may be determined by the representative who contacted the potential customer in response to the system's recommendation, by another automated mood analysis component, or by another human or automated process. The actual mood data may be input into the machine learning components via any acceptable means, such as, for example, a web page for the representative to enter actual mood data or an application programming interface (API) for an automated mood analysis system to send the machine learning component 158. The feedback may also be entered in to the historical mood data for the customer as another data point alongside the historical data produced by the social network data analysis process. Using these indications of the customer's actual mood, the machine learning component 158 can refine the algorithms and processes used to produce the customer's predicted mood, and/or provide a more accurate predicted mood score in future uses.

Regardless of the particular implementation, "software" may include computer-readable instructions, firmware, wired or programmed hardware, or any combination thereof on a non-transitory medium operable when executed to perform at least the processes and operations described herein. Indeed, each software component may be fully or partially written or described in any appropriate computer language including C, C++, Java™, Visual Basic®, ABAP, assembler, Perl®, any suitable version of 4GL, as well as others. It will be understood that while portions of the software illustrated in FIGURE 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components, as appropriate. In the illustrated environment 100, each processor 142 executes the corresponding CRM application 144 and mood analysis engine 150 stored on the associated CRM system 130. In some instances, a CRM system 130 may be associated with the execution of two or more instances of either the CRM application 144 or mood analysis engine 150, as well as one or more distributed applications executing across two or more servers associated with CRM system 130.

As illustrated in FIGURE 1, the CRM system 130 also includes a memory 164. The memory 164 may be any non-transitory, computer-readable medium or an array of multiple heterogeneous or homogeneous computer-readable media. The illustrated memory 164 includes a plurality of rule sets 166, a customer database 168, and a set of historical data 178.

The plurality of rule sets 166 define procedures, policies, and mechanisms for contacting customers, analyzing customer social network data, and constraining the analysis and execution of the mood analysis mechanism. In some situations, the rule sets 166 may be implemented as rows inside a database, such as the customer database 168. The rule sets 166 may also be stored as attributes of the potential customer for which mood analysis is to be performed. The rule sets 166 can be used by the CRM application 144 and/or the mood analysis engine 150 to perform the various operations, including those described herein.

The memory 164 also includes a customer database 168. The customer database 168 may be one of or a combination of several commercially available database and non-database products. Acceptable products include, but are not limited to, SAP HANA DB, SAP MaxDB, Sybase ASE, Oracle databases, IBM Informix databases, DB2, MySQL, Microsoft SQL Server, Ingres, PostgreSQL, Teradata, Amazon SimpleDB, and Microsoft Excel, as well as other suitable database and non-database products. The customer database 168 can include several pieces of information related to the customer relationships managed by the CRM system 130. The contact information 170 includes mechanisms by which the customer can be contacted. For example, the contact information 170 may include the name of the primary customer representative for a particular customer in a B2B context, or the name of the customer itself in a B2C context. The contact information 170 may also include information necessary to communicate with the customer or the customer representative via various media, including, but not limited to, email addresses, telephone numbers, instant messaging accounts, Twitter accounts, and Facebook accounts. In some instances, at least a portion of the customer information may be stored outside of the customer database 168.

The customer database 168 also includes social network account information 172. The social network account information 172 is used by the mood analysis engine 150 to determine which social network accounts are associated with a given customer. For example, the social network account information 172 may include a user's email address, a user's social networking username, or a link to a user's public social networking content. The mood analysis engine 150 then performs mood analysis on the social network activity from these accounts. Generally, the social network account information 172 is associated with a single customer and may include account information for one or more of the services: Facebook, Twitter, Foursquare, Linkedin, Tumblr, Yelp, MySpace, Google+, and Orkut, among others. Additionally or alternatively, the social network information may include group names that are associated to multiple customers. For example, if several representatives for a certain customer are part of a certain public Facebook group, the group could be entered and monitored for relevant mood activity for each, or at least some, of the participants. Also, if a particular customer has a social media account for the company as a whole, mood data for that account could be applied to representatives of that particular customer in addition to mood data from their personal accounts.

The customer database also includes CRM account information 174. This information is used to associate the customer's contact information to a corresponding CRM account stored in the CRM system 130. For example, contact information for a certain customer representative could be tied to the master CRM account for the customer through the use of the CRM account information 174.

The illustrated customer database 168 also includes a sentiment dictionary 176. The sentiment dictionary 176 may be used by the sentiment analysis component 156 of the mood analysis engine 150 to determine which elements of a customer's social network data are relevant to the customer's mood, and how to quantify the effect the elements have on the customer's perceived mood. In some cases, the sentiment dictionary 176 includes a list of words and phrases for the sentiment analysis component 156 to search for in the social network data, and a corresponding score to assign to each of the words and phrases. For example, the words "great" or "glad" may be assigned positive point values indicating a good mood, whereas the words "sucks," "sad," and "tired" may be assigned negative point values indicating a bad mood. The sentiment dictionary 176 may be associated with or provided access to a suitable thesaurus to identify words and phrases outside of the sentiment dictionary. The sentiment dictionary 176 may also include additional factors and score adjustments for those factors. These factors include, but are not limited to, time of day, day of week, month of year, gender, age, weather, and nationality.

As illustrated by FIGURE 1, the memory 164 further includes a set of historical data 178. The historical data 178 is mood data produced by the mood analysis engine for a particular customer or a set of customers. In one example, the historical data 178 includes the produced mood scores for the social network data, the raw social network data itself, a timestamp of when the social network data was produced, and a type of social network data. The historical data 178 is used by the machine learning component 158 to analyze and predict the future mood of the customer to make determinations of and recommendations as to the likely best time to contact the customer. For example, analysis of the historical data could indicate that a potential customer is in a good mood to talk at 3pm on Thursdays. The analysis could also provide a more general indication of the potential customer's mood, such as identifying that the customer is in a good mood in the late afternoon every day. The historical data 178 may also contain indications of the customer's actual mood that are used as feedback to the machine learning component (as described above).

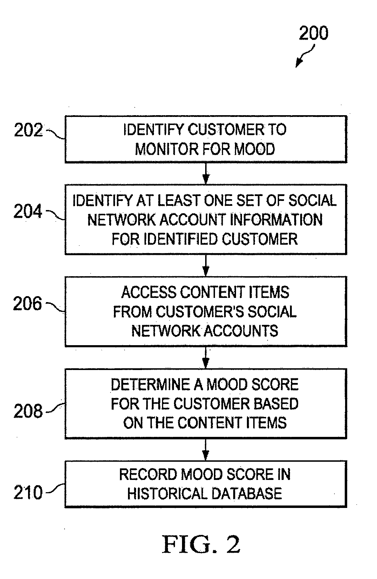

FIGURE 2 is a flowchart of an example method for gathering and analyzing social network data to evaluate a customer's mood. For clarity of presentation, the description that follows generally describes method 200 in the context of environment 100 illustrated in FIGURE 1. However, it will be understood that method 200 may be performed, for example, by any other suitable system, environment, or combination of systems and environments, as appropriate.

At 202, a customer to monitor for mood data is identified. This identification may be made by a representative of the organization such as a sales person or marketing representative, or by an automated process associated with CRM system. In such an automated scenario, a process may analyze customer data stored by the CRM system to determine that a particular customer may be interested in purchasing more goods and/or services and therefore should be monitored so as to determine the most opportune time to approach the customer. Example types of data that can be analyzed by an automated process includes, but is not limited to, customer order data, customer contract termination data, customer complaint data, and customer financial data.

At 204, at least one set of social network account information is identified for the identified customer. The social networking account information may include a customer's email address, a customer's social networking username, or a link to the customer's public social networking content. The identification may involve retrieving social network account information associated with the customer from a customer database. The identification may also involve a representative from the organization manually entering the social network information for the customer into the system. In other instances, the identification may involve the customer entering their social network information into the system, such as in response to a questionnaire or by filling out an online form.

At 206, at least one social network from the customer's social network accounts is accessed to identify, access, and/or retrieve content items. In some embodiments, the content items are retrieved from the potential customer's public social network feed. The content items may include status updates, posts, pictures, videos, songs, links, comments, check-ins, calendar updates, indications of activity in applications (such as games) or any other type of content associated with the social network. The content of a content item may include multiple types of information. For example, a content item may include a picture, a text description of the picture by the posting user and comments by the posting user and connections of the posting user. Further, the content of the content items may describe not only activity by the potential customer, but could also describe activity by other users to which the potential customer is connected in the social network. For example, a friend of a potential customer posting status updates indicating a tragedy has occurred in the potential customer's social circle may indicate that the potential customer is in a bad mood and should not be contacted.

The content of a content item may also include one or more sentiment indicators that categorize the content item or indicate a user's sentiment towards the content item. The content item may include one or more icons that the posting user and connections of the posting user may select. The one or more buttons may correspond to emoticon. For example, a happy face may indicate a user likes the content item which may indicate that the user is happy and a sad face may indicate that the user doesn't like the content item or that the user is sad. In the example, the one or more icons may include text such as "like" or "dislike" that a user may select. In some cases, the content item may include a character or symbol followed by text that characterizes the content item. For example, a content item may include a symbol followed by some text that captures how the posting user feels (e.g., "#wow"). The content item may also include text indications of emotions in the form of emoticons. For example, a content item including the text ":-)" (a smiling emoticon) may indicate a positive mood, while a content item including the text ":-(" (a frowning emoticon) may indicate a negative mood. In some implementations, at least one of the retrieved content items is a content item that has an indicator provided by the potential customer, which the customer provided by either selecting an icon associated with the content item or providing a comment to the content item. The content item may have been posted by the potential customer or another user.

Accessing the social network accounts may involve requesting and receiving social network data from one or more social network data sources (e.g. "pulling" social network data from the sources). In other cases, this access may involve passively receiving social network data from one or more social network data sources (e.g. the sources "pushing" social network data to the system). In another example, a social collection component may poll social network data sources for new social network data for the customer at regular intervals. For example, the social collection component may request new social network data from Facebook at 12:00 pm, and may request new social network data again at 12:05 pm. In other cases, the poll delay may be variable, such as, for example, polling more frequently during the day or other times when new social network data is likely to be produced. This access may also involve subscribing to a social network data source associated with the particular customer to monitor, and then passively receiving social network data sent to it by the social network data source. The method 200 may also send a request for social network data and then wait indefinitely for a response (i.e. "long polling"). In other cases, the method 200 may send a request to an intermediary which aggregates, caches or otherwise processes the social network data and presents it to a social collection component.

A copy of the web page containing social network data for a customer can be retrieved. The retrieval may be performed via HTTP or by any other suitable protocol. In such cases, the retrieved web page may be compared to the most recent stored copy of the web page, and discarded if the page has not changed. In another example, the "cache until" attribute of the HTTP header returned with a web page may be checked to determine if the web page has changed.

At 208, a mood score based on the content items from the social networks is determined. The mood score may be determined entirely by a sentiment analysis component, or by a sentiment analysis component and a machine learning component cooperatively. In such cases, the learning component may take into account past historical observation and feedback from actual customer mood scores to adjust the mood scoring. A more thorough example description of 208 will be presented relative to FIGURE 3.

At 210, the determined mood score associated with the social network data is stored in the historical database. Entries in the historical database may include a timestamp, an associated customer, the raw social network data, the processed social network data, a composite mood score, a plurality of component mood scores, weighting information associated with the component mood scores, and detailed information related to the scoring process (e.g. which words and phrases contributed to the computed mood score and by how much).

In some cases, a mood type may also be determined based on the mood score. The mood type may be a characterization of the mood score in terms of human moods, such as, for example "happy" or "amiable" if the mood score indicates a positive mood, or "angry" or "unhappy" if the mood score indicates a negative mood. In some cases, the mood type may be mapped to specific mood score values, and may serve to communicate the mood in a more understandable way to a user. For example, a mood score of 1 may be configured to represent the mood type "amiable" while a mood score of -1 may be configured to represent the mood type "unhappy." The mood type may also be assigned based on the mood score and additional factors, such as a supplemental analysis of the social network content items after generating the mood score. In some instances, the mood type may be provided for display. In some cases, this may include presenting the mood type to a user via a graphical user interface. Providing the mood type for display may also include presenting the mood type via any appropriate mechanism, including, but not limited to, email, a web page, a database entry, a report, or any other suitable mechanism.

FIGURE 3 is a flowchart of an example method 208 for analyzing a customer's social network data to produce a mood score. For clarity of presentation, the description that follows generally describes method 208 in the context of environment 100 illustrated in FIGURE 1. However, it will be understood that method 208 may be performed, for example, by any other suitable system, environment, or combination of systems and environments, as appropriate. As discussed earlier, method 208 corresponds to and provides additional detail for 208 of method 200. However, the illustration and description of method 208 relative to FIGURE 3 are not intended to limit the operation of method 200, and are presented for exemplary purposes only.

At a high level, the mood score is based on individual scores of the content items. Different aspects of the customer's social network content items are analyzed and scored. The score for a content item may be based on an analysis of the content of the content item to determine a general mood, a personal mood, a professional mood, activity relevance, or any combination thereof. In some implementations, the score for a content item may be based on a plurality of scores, each score corresponding to a type of analysis on the content of the content item. For example, the score for a content item may be based on a general mood score for the content item, a personal mood score for the item, a professional mood score for the content item, and an activity relevance mood score for the item. The mood score and/or the scores for the content items may be weighted or adjusted based on the type of the customer, the type of the content item, and/or the source of the content item.

At 302, the content from the accessed content items is tokenized. Generally, tokenization refers to splitting a string (e.g. the social network data) into component words and phrases. Tokenization may also involve grouping words and phrases from the social network data into larger tokens according to instructions contained in a sentiment dictionary. In some cases, tokenization may include grouping words according to grammatical rules, such as grouping words into noun or verb phrases. In other cases, tokenization may include deleting certain words from the social network data. Tokenization may also include correcting spelling or grammar in the social network data to allow for easier analysis of the social network data in the subsequent steps of the method 208.

In some implementations, a general mood score for each of the content items may be determined based on an analysis of the tokenized content of the content items. Words and phrases from the tokenized content are compared to words and phrases in a sentiment dictionary. The general mood score for a content item is based on matches of words and phrases in the tokenized content to words and phrases in the sentiment dictionary. The sentiment dictionary may indicate numeric adjustments that should be performed on the score value if a certain word or phrase is found. The general mood score for a content item may be a product, total, medium or average of the score values of the words or phrases in the sentiment dictionary. For example, the sentiment dictionary may assign a score value of -1 to the word "sucks," a score value of 1 to "wow," and a score value of 0.5 to the phrase "happy Friday." A content item having these words and phrases may have a general mood score based on the average of the score values (i.e., 0.16), a medium score value (i.e., 0.5), a total (i.e., 0.05) or a product (-0.05).

In some implementations, at 304, words and phrases indicating the customer's personal mood are identified in the tokenized content of the content items and a personal mood score is generated for each of the content items. The customer's personal mood is intended to be a representation of the customer's state of mind with regard to their personal life. The definitions of which words affect the customer's personal mood and by how much may be contained in a sentiment dictionary. The sentiment dictionary may contain words and phrases that are categorized as indicating personal mood. The tokenized content items may be scanned for occurrences of the words in the sentiment dictionary. The tokenized content of a content item may be divided into chunks and scanned in parallel by different threads of execution. The method 300 may also utilize a temporary database table for storing the tokenized content items. Queries for various words from a sentiment dictionary may then be run against the table to identify words or phrases indicating the customer's mood. Regular expressions may also be used to identify words and phrases in the tokenized social network data. The personal mood score for a content item is based on matches of words and phrases in the tokenized content to words and phrases in the sentiment dictionary. The sentiment dictionary may indicate numeric adjustments that should be performed on the score value if a certain word or phrase is found. The personal mood score may be generated in a similar fashion as the general mood score and for a content item may be a product, total, medium or average of the score values of the words or phrases in the sentiment dictionary.

In some implementations, at 306, words and phrases indicating the customer's professional mood are identified in the tokenized content of a content item and a professional mood score is determined for the content item. The customer's professional mood is intended to be a representation of the customer's state of mind with regard to their work. The definitions of which words affect the customer's professional mood and by how much may be contained in a sentiment dictionary. The sentiment dictionary may contain words and phrases that are categorized as indicating professional mood. In such cases, the tokenized content items may be scanned for occurrences of words in the sentiment dictionary. In other cases, the tokenized content items may be divided into chunks which are scanned in parallel by different threads of execution. The tokenized content items could also be inserted into a temporary database table. In such an implementation, queries for various words from the sentiment dictionary would be run against the table. The tokenized social network data may also be examined using a regular expression text searching library. The professional mood score for a content item may be based on matches of words and phrases in the tokenized content to words and phrases in the sentiment dictionary. The sentiment dictionary may indicate numeric adjustments that should be performed on the score value if a certain word or phrase is found. The professional mood score may be generated in a similar fashion as the general mood score and for a content item may be a product, total, medium or average of the score values of the words or phrases in the sentiment dictionary.

Generally different sets of words will affect a customer's personal and professional mood. For example, social network data stating "my car is in the shop" would generally affect only the customer's personal mood, whereas social network data stating "the project is on schedule" would affect only the customer's professional mood. However, in some instances, social network data may affect both a customer's personal and professional, and may affect the two mood elements by different amounts. All such configurations are contemplated by and may be implemented using the sentiment dictionary.

In some implementations, at 308, words and phrases indicating the customer's activity relevance are identified in the tokenized content items. Activity relevance is an indication of what activity the customer is currently performing and how relevant it is to the sales, marketing, or information that the organization desires to present to them. For example, if the organization wishes to sell widgets to a customer, and the customer's representative tweets "I really need some widgets," this would indicate very high activity relevance. This operation is optional and is omitted in certain implementations. In some cases, 308 may involve identifying a desired sales, marketing, or other activity desired to be presented to the customer prior to identifying words and phrases indicating activity relevance. The activity relevance of a content item may be determined and may affect the score of the content item. Different activities may be assigned different values. For example, an activity involving purchasing may be assigned a value that is added, subtracted, multiplied or averaged with the content item score for a content item. The activity relevance of all of the content items may be determined and may be used to adjust the customer's mood score.

In some implementations, the score for one or more of the content items is determined by one or more of the mechanisms of 304, 306, and 308. As discussed above, one or more of the content items may be given a content item score that may be a composite of a general mood score for the content item, a personal mood score for the item, a professional mood score for the content item, and an activity relevance mood score for the item.

The scores may be selected from a range of numeric values, such as [-2, 2]. In other cases, a score of 0 may indicate a neutral or indeterminate mood, a positive score may indicate a positive ("good") mood, and a negative score may indicate a negative ("bad") mood. The upper and lower bounds of the score range may vary from implementation to implementation. The mood score may also be selected from a set of non-numeric values, such as "good," "bad," or "neutral." The individual mood scores may also be complex indicators including various aspects of the mood score.

In some implementations, the score for a content item may be weighted or adjusted based on the type of the content item. Different types of content items may include status updates, blog posts, pictures, videos, songs, links, comments, check-ins, calendar updates, and event updates. Each type of content item may be associated with a weight or value. For example, a picture post may be weighted higher than a check in or a comment. The weight or value of the type of the content item may be added, subtracted, multiplied or averaged with the score for the content item.

In some implementations, the score for a content item is weighted or adjusted based on the source of the content item. Some social networking systems may provide better indications of a customer's mood than others. In some cases, the weighting of different data can be configured for each potential customer based on analysis of their social networking activity. For example, it may be determined that the potential customer is more likely to share personal mood information on Facebook than Linkedin. Accordingly, the method may give Facebook posts more weight when determining personal mood. In some implementation each social networking system is associated with a different weight or value. For example, content items for a first social networking system may be weighted higher than content items from a second social networking system. The weight or value associated with a social networking system may be added, subtracted, multiplied or averaged with the score for the content item.

In some implementations, the score of for a content item may be weighted or adjusted based on one or more sentiment indicators associated with the content item. As discussed above, the sentiment indicators may have been selected by the customer or entered by the customer. For example, the customer may have selected one or more icons associated with a content item or by entering a special symbol followed by text that characterizes the content item. Each sentiment indicator may be associated with a score or value. For example, different emoticons may be associated with different values. The weight or value associated with a social networking system may be added, subtracted, multiplied or averaged with the score for the content item.

In some implementations, at 310, the customer's type is identified. The customer's type may indicate some attribute about the customer and is used later in the method 208 for calculating the composite mood score. Examples of customer types include, but are not limited to, business-to-business (B2B), business-to-consumer (B2C), institutional, and existing. The customer's type may be stored in a customer database, or in a separate location and tied to the customer's record in the customer database, such as by a foreign key. The identified customer type may affect the mood score for the customer. Each customer type may be assigned a value to adjust the mood score. The value of the customer type may be added to the mood score, subtracted from the mood score, or multiplied with the mood score.

At 312 a composite score is determined for the customer based on the analysis of the content items. The composite score may be determined based on the scores for the content items. For example, the composite score may be a total, product, average or medium of the scores for the content items.

In some implementations, the composite score may be adjusted or weighted based on the determined customer type for the customer. Generally, the customer type is used to affect the weighting giving the different individual scores when combining them into the composite score. For example, for a B2C customer the personal mood might be weighted greater than the professional mood because the organization is pitching to the consumer and not to a company he or she represents. On the other hand, in a B2B scenario the customer representative might have professional mood weighted higher than the professional mood in the composite score, since ideally the representative should put business interests first regardless of his personal mood. In some cases, the customer's type may not be included in the generation of the composite mood score. The composite mood score may be attained by simply adding at least a portion of the individual mood scores.

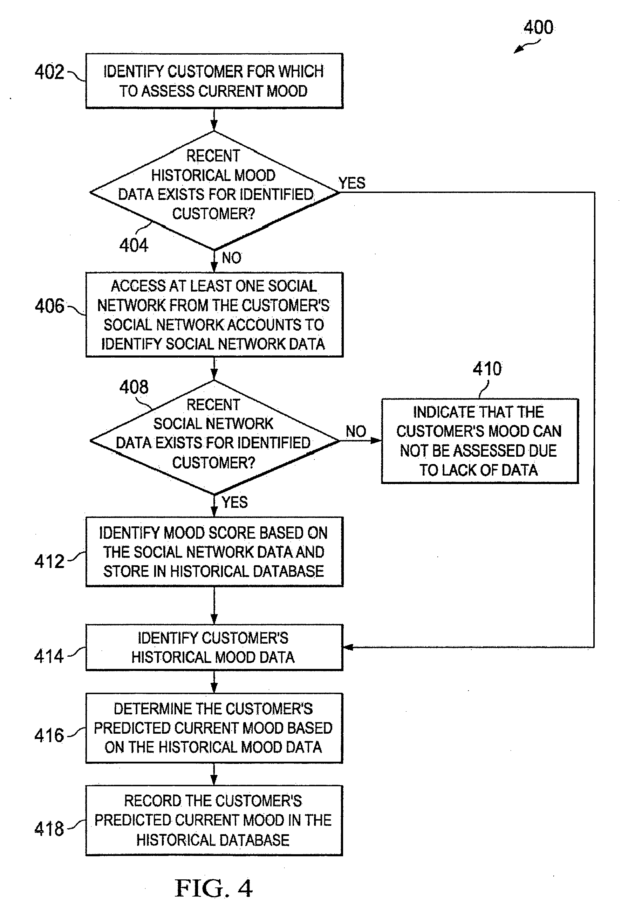

FIGURE 4 is a flowchart of an example method 400 for assessing a customer's current mood based on stored historical mood data. For clarity of presentation, the description that follows generally describes method 400 in the context of environment 100 illustrated in FIGURE 1. However, it will be understood that method 400 may be performed, for example, by any other suitable system, environment, or combination of systems and environments, as appropriate.

At 402, a customer is identified for which to assess that customer's current mood. This identification may be performed by a representative from the organization prior to attempting to contact the customer for a sales meeting or other solicitation of new business, or may be performed automatically by the system based on analysis of the customer's stored information. For example, if a customer has recently increased their order totals, the system may flag that customer as ripe to be approached about new business. In such a case, the system may also identify that customer to be monitored for mood. In other instances, a group of potential customers may be associated with a particular sale or promotion. Individuals in the group of potential customers may have their moods assessed to determine the best potential candidate to reach out to at a particular time.

At 404, a determination is made as to whether recent historical mood data exists for the identified customer, such that the historical information can be incorporated into the current mood analysis, or, possibly, used in lieu of a new analysis. The determination may be performed, for example, by querying a database for historical data. If no historical mood data exists, the method 400 continues to 406 to obtain recent social network data for the customer. At 406, at least one social network from the customer's social network accounts is accessed to identify social network data. This access may be performed in the same manner described relative to 206 of method 200, or may be performed in any other acceptable way. In some cases, the method may continue to 414 regardless of whether recent historical data exists for the identified customer, omitting 406 through 412 entirely.

At 408, a determination is made as to whether recent social network data exists for the identified customer. This determination may be performed by examining the results of the previous accessing at 406. If no recent historical data exists, the method continues to 410, wherein an indication that the customer's mood cannot be assessed due to lack of data is performed. This indication may involve communicating with the representative from the organization that requested that the customer be monitored for mood, such as by sending an email, or returning an error response to the request.

If recent social network data exists for the identified customer, method 400 continues to 412, where a mood based on the social network data is identified and stored in the historical database. This operation may be performed in a similar manner as described relative to operations 208 and 210 of method 200. The illustrated method 400 then continues to 414, described below.

Returning to 404, if it is determined that historical mood data exists for the customer, then the method 400 continues to 414, in which the customer's historical mood data is identified. Generally, this identification involves querying or retrieving historical data for historical mood data specific to the identified customer.

At 416, the customer's predicted mood is determined based on the historical mood data. This determination can, for example, be made by a machine learning component according to the techniques described in FIGURE 1. However, the present disclosure contemplates any combination of known statistical analysis techniques applied to the historical mood data in order to produce the predicted mood. In some cases, recent historical mood data may be given greater weight in making the determination of the customer's predicted current mood. At 418, the customer's predicted current mood is stored in the historical database.

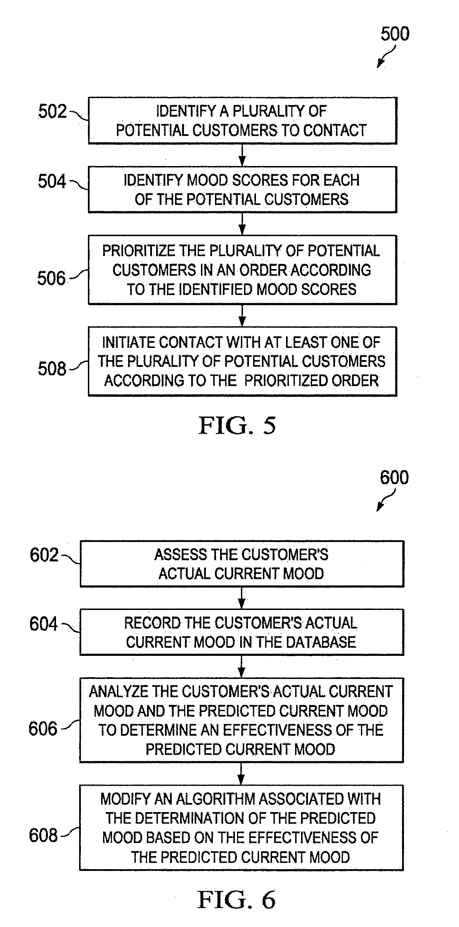

FIGURE 5 is a flowchart of an example method 500 for prioritizing contact with multiple customers based on their predicted current mood. For clarity of presentation, the description that follows generally describes method 500 in the context of environment 100 illustrated in FIGURE 1. However, it will be understood that method 500 may be performed, for example, by any other suitable system, environment, or combination of systems and environments, as appropriate.

At 502, a plurality of potential customers to contact is identified. This identification may be performed by a representative from the organization prior to attempting to contact the customers for sales meetings or other solicitation of new business, or may be performed automatically by the system based on analysis of the customer's stored information. For example, if a customer has recently increased their order totals, the system may flag that customer as ripe to be approached about new business.

At 504, mood scores are identified and/or determined for each of the potential customers. This identification and/or determination can occur, for example, according to the techniques described relative to FIGURE 3. At 506, the plurality of potential customers is prioritized according to the identified mood scores. This prioritization may involve ordering the potential customers in a list in descending order of mood score, with the customer having highest or best mood score appearing first. In implementations including non-numerical mood scores, a set of rules as to which scores should be given priority will govern the ordering of the list of potential customers.

At 508, contact is initiated with at least one of the plurality of potential customers according to the prioritized order. Initiating contact may include one or more of the following actions: calling the potential customer on the phone; sending the potential customer an email; automatically calling the potential customer and assigning the call to a sales associate in a group; sending a sales representative a calendar appointment scheduling a future call with the potential customer; sending the potential customer a calendar appointment scheduling a future call with a sales representative; assigning each of the potential customers in the list to a sales representative in the order they appear in the prioritized list until at least several sales representatives in the organization or in a group inside the organization are assigned a potential customer; and/or any other appropriate actions or combination of actions.

FIGURE 6 is a flowchart of an example method 600 for providing feedback to the system representing a customer's actual current mood to improve the accuracy of the mood evaluation method. For clarity of presentation, the description that follows generally describes method 600 in the context of environment 100 illustrated in FIGURE 1. However, it will be understood that method 600 may be performed, for example, by any other suitable system, environment, or combination of systems and environments, as appropriate.

At 602, the customer's actual current mood is assessed. This assessment may be made by a representative who contacted the customer in response to the system's recommendation, by another automated mood analysis component, or by another human or automated process. In some situations, the customer's actual mood is scored according to the same scale used to quantify the customer's mood as determined by the customer's social network data. The customer's actual mood may also be scored according to a different scale. The identification may also include a narrative description of the customer's mood.

At 604, the customer's actual current mood is stored in a database. These entries may be identical to other historical mood entries in the database except for a type indicator denoting them as actual observations rather than system analysis. In other situations, the entries representing the customer's actual mood may be stored in a separate database from the historical data.

At 606, the customer's actual current mood and the predicted current mood are analyzed to determine an effectiveness of the predicted current mood. This operation may include additional analysis beyond a simple comparison, such as analyzing the individual component scores to determine which scores were most in error, or a relative error rate for a plurality of scores. In other cases, the operation may not include a comparison at all, but a more advanced statistical analysis technique, such as those known in the art.

At 608, an algorithm associated with the determination of the predicted mood is modified based on the effectiveness of the predicted current mood. In some cases, this modification may involve the learning component modifying a historical analysis component, a regression analysis component, or any other component in response to receiving the actual mood data. The learning component may also change configuration data associated with the historical analysis component, the regression analysis component, or any other component in response to receiving the actual mood data. In other cases, the learning component may modify a sentiment dictionary in response to receiving and analyzing the actual mood data. The learning component could also enter a customer specific entry in the sentiment dictionary in response to receiving and analyzing the actual mood data, for example in a case where the analysis reveals that a certain customer representative uses a certain word in a contradictory or non-standard way.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., a central processing unit (CPU), a FPGA (field programmable gate array), or an ASIC (application-specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program, by way of example, can be based on general or special purpose microprocessors or both, or any other kind of CPU. Generally, a CPU will receive instructions and data from a read-only memory (ROM) or a random access memory (RAM) or both. The essential elements of a computer are a CPU for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer-readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD (liquid crystal display), or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

Accordingly, the above description of example implementations does not define or constrain this disclosure. Other changes, substitutions, and alterations are also possible without departing from the spirit and scope of this disclosure.

## Claims

1. A computer-implemented method executed by at least one processor, the method comprising:
identifying a customer to monitor for mood;
identifying at least one set of social network account information for the identified customer;
accessing content items from at least one social network associated with the at least one set of social networking account information for the customer;
determining a mood score for the identified customer based on the content items; and
recording the determined mood score in a database.

2. The computer-implemented method of claim 1, wherein determining the mood score based on the content items further comprises:
tokenizing the content from the content items; and
identifying elements of the tokenized content from the content items that indicate a first mood component of the identified customer.

3. The computer implemented method of claim 2, wherein the elements of the tokenized content that indicate the mood component are selected from a group consisting of: words, phrases, sentences, noun phrases, verb phrases, contiguous word groups, and non-contiguous word groups and/or
wherein the first mood component is selected from a group consisting of: personal mood, professional mood, and activity relevance.

4. The computer-implemented method of claim 2 or claim 3, further comprising:
generating a first component mood score indicative of the first mood component of the identified customer;
identifying elements of the tokenized content from the content items that indicate a second mood component of the identified customer; and
generating a second component mood score indicative of the second mood component of the identified customer; and
generating a composite mood score based on at least the first component mood score and the second component mood score,
wherein the composite mood score may be generated based at least in part on weighting the first component mood score and the second component mood score based on a customer type for the identified customer.

5. The computer-implemented method of any one of the preceding claims, wherein the content items include at least one of a status update, a post, a picture, a video, a song, a link, a comment, a check-in, and a calendar update, and/or
wherein at least one of the content items is from a user connected to the identified customer in a social networking system, and/or
wherein at least one of the content items describes activities of the identified customer.

6. The computer-implemented method of any one of the preceding claims, wherein determining the mood score comprises:
analyzing content of the content items;
determining scores for the content items based on the analysis of the content of the content items;
determining a composite score based on the scores of the content items; and
setting the composite score as the mood score.

7. The computer-implemented method of claim 6, wherein a score of a content item is based on a weight associated with a social networking system providing the content item and/or
wherein a score of a content item is weighted based on a type of the content item.

8. The computer-implemented method of any one of the preceding claims, further comprising:
identifying the identified customer's historical mood data;
determining an estimated mood score for the identified customer based on the historical mood data; and
recording the estimated mood score for the customer in the database.

9. The computer-implemented method of claim 8, further comprising:
comparing the estimated mood score for the customer and the determined mood score for the customer to determine an effectiveness of the estimated mood score; and
modifying an algorithm associated with the determination of the estimated mood score based on the comparison.

10. The computer-implemented method of any one of the preceding claims, further comprising:
identifying a plurality of potential customers to contact;
determining mood scores for each of the potential customers;
prioritizing the plurality of potential customers in an order according to the determined mood scores; and
initiating contact with at least one of the plurality of potential customers according to the prioritized order.

11. The computer-implemented method of any one of the preceding claims, further comprising:
determining a time to contact the identified customer based on the mood type of the identified customer;
providing the time; and
providing a notification to contact to the identified customer at the determined time, and/or
further comprising:
determining a mood type based on the mood score; and
providing the mood type for display.

12. A computer program product encoded on a tangible, non-transitory storage medium, the product comprising computer readable instructions for causing one or more processors to perform operations comprising:
identifying a customer to monitor for mood;
identifying at least one set of social network account information for the identified customer;
accessing content items from at least one social network associated with the at least one set of social networking account information for the customer;
determining a mood score for the identified customer based on the content items; and
recording the determined mood score in a database.

13. The computer program product of claim 18, further comprising:
identifying a customer for which to assess a current mood;
identifying the customer's historical mood data;
determining a predicted current mood for the customer based on the historical mood data; and
recording the predicted current mood for the customer in the database.

14. The computer program product of claim 19, further comprising:
assessing an actual current mood for the customer;
recording the actual current mood in the database;
analyzing the actual current mood and the predicted current mood for the customer to determine an effectiveness of the predicted current mood; and
modifying an algorithm associated with the determination of the predicted mood based on the effectiveness of the predicted current mood.

15. A system, comprising:
one or more processors;
memory storing one or more programs for execution by the one or more processors, the one or more programs including for:
identifying a customer to monitor for mood;
identifying at least one set of social network account information for the identified customer;
accessing content items from at least one social network associated with the at least one set of social networking account information for the customer;
determining a mood score for the identified customer based on the content items;
recording the determined mood score in a database.
